# EUROPEAN PATENT SPECIFICATION

(11) **EP 4 071 283 B1**
(45) Date of publication and mention of the grant of the patent: **09.09.2026**
(21) Application number: 20897013.7
(22) Date of filing: 15.10.2020
(51) Int. Cl.: D01D 5/00, B05B 15/522, B05B 7/06, B05B 5/043, B05B 15/55, B05B 15/555, B05B 1/20

(54) **NOZZLE BLOCK PROVIDED WITH NOZZLE CLOGGING PREVENTION MEANS, AND ELECTROSPINNING DEVICE INCLUDING SAME**
DÜSENBLOCK MIT DÜSENVERSTOPFUNGSVERHINDERUNGSEINRICHTUNG UND ELEKTROSPINNVORRICHTUNG DAMIT
PORTE-BUSE POURVU D'UN MOYEN EMPÊCHANT LE COLMATAGE DE LA BUSE ET DISPOSITIF D'ÉLECTROFILAGE LE COMPRENANT

(30) Priority: 05.12.2019 KR 20190160739
(43) Date of publication of application: 12.10.2022
(73) Proprietor: Park, Jong-Su, Seoul 06503 (KR)
(72) Inventor: HUH, Woong, Incheon 22020 (KR); HWANG, Woong June, Bucheon-si, Gyeonggi-do 21036 (KR); LEE, Yoon Chang, Siheung-si, Gyeonggi-do 14923 (KR); LEE, Chun-su, Siheung-si, Gyeonggi-do 14923 (KR); PARK, Jong-Su, Seoul 06503 (KR)
(74) Representative: advotec.
(86) International application number: PCT/KR2020/014122
(87) International publication number: WO 2021/112394

(56) References cited:
- WO-A1-2009/075357
- CN-A- 107 151 824
- KR-A- 20090 055 934
- KR-A- 20160 121 655
- KR-A- 20190 086 127
- KR-A- 20190 086 127
- KR-B1- 100 662 091
- KR-B1- 100 662 091

## Description

### TECHNICAL FIELD

The present disclosure relates to an electrospinning device, and more specifically, to a nozzle block for preventing a nozzle discharging a spinning solution from being clogged by solidification of a polymer material when the nanofiber manufacturing process by an electrospinning method is temporarily interrupted, and an electrospinning device including the same.

### BACKGROUND ART

The electrospinning process is a process of producing nanofibers in an environment where an electric field is formed by applying a direct current high voltage of thousands to tens of thousands of volts to a solution and connecting the ground or (-) voltage to a collector.

This electrospinning process is typically implemented by an electrospinning device. The electrospinning device is divided into a top-down electrospinning device in which the collector is positioned below the spinning nozzle and a bottom-up electrospinning device in which the collector is positioned above the spinning nozzle. However, according to the top-down electrospinning device, since the spinning solution is continuously supplied to the nozzle to which a high voltage is applied, there is a problem that the effect of the applied electric force is degraded. Therefore, the bottom-up electrospinning device for solving such a problem has been gradually developed and used.

A nozzle composed of a capillary needle is used as a spinning nozzle for producing nanofibers. When the solution is continuously discharged during the electrospinning process, the problem of nozzle clogging does not occur. However, when the process is temporarily interrupted, there is a problem in that the nozzle is clogged by solidification of the solution due to solvent volatilization at the tip of the nozzle, making it difficult to proceed with the subsequent process. This phenomenon frequently occurs in the process of producing nanofibers from a solution prepared using a highly volatile solvent.

For example, when producing poly(vinylidene fluoride) (PVDF) nanofibers by electrospinning, the PVDF solution uses a mixed solution of dimethylacetamide (DMAc) and acetone as a solvent to increase the volatilization speed of a solvent. Herein, the ratio of acetone is in the range of 50% to 90% to produce nanofibers.

However, as the ratio of acetone is increased, the solvent volatility increases and the frequency of formation of agglomerates at the nozzle tip increases. Particularly, in the case of biopolymers, since a solvent with high volatility is used, there is a problem in that the nozzle is easily clogged when the process is temporarily interrupted.

Meanwhile, poly(caprolactone) (PCL)/acetic acid solution, poly(lactic acid) (PLA)/dichloromethane solution, silk/formic acid solution, and nylon/formic acid solution have a problem that the nozzle tip is frequently clogged due to rapid volatilization of the solvent.

Various research and development have been performed to solve the problem that a nozzle discharging the spinning solution is clogged by solidification of a polymer material when the nanofiber manufacturing process by the electrospinning method is temporarily interrupted.

Patent Literature 1 (Korean Patent Publication No. 10-1178171) relates to a nozzle block for preventing clogging and contamination of nozzles, and a bottom-up electrospinning device including the same. Patent Literature 1 discloses an anti-solidification solution accommodating unit configured such that the spray nozzle is completely immersed in the anti-solidification solution to prevent the solvent contained in the spinning solution from evaporating through the tip of the spray nozzle when the spraying of the spinning solution from the spray nozzle is interrupted during the electrospinning process, and the anti-solidification solution is recovered when the spraying of the spinning solution from the spray nozzle is resumed. Accordingly, even if the nanofiber manufacturing process is temporarily interrupted in the middle, it is possible to prevent the nozzle from being clogged or contaminated.

Meanwhile, Patent Literature 2 (Korean Patent Publication No. 10-2025159) discloses a nozzle device for electrospinning including a needle-shaped wire stopper for needle insertion that is installed so as to be inserted into the inside of the capillary-type needle of the spinning nozzle to prevent the solution from being solidified at the tip of the spinning nozzle, and a cleaning spray nozzle that removes deposits by spraying solvent into the tip of the spinning nozzle. Patent Literature 2 discloses that the needle-shaped wire stopper for needle insertion is inserted into the inside of the capillary-type needle to prevent the clogging of the nozzle tip by moving the needle-shaped wire stopper for needle insertion in front of the capillary-type needle of the spinning nozzle when the electrospinning process is interrupted. Also, the cleaning spray nozzle performs a cleaning process in which the needle-shaped wire stopper for needle insertion is separated from the capillary-type needle of the spinning nozzle and then a solvent is sprayed into the tip of the capillary-type needle to remove deposits.

Through this, Patent Literature 2 prevents the solution from being solidified at the tip of the spinning nozzle when the electrospinning process is interrupted, thereby stably performing the electrospinning process without clogging the nozzle in the next process.

Further prior art is disclosed in CN 107 151 824 A and KR 100 662 091 B1.

### DISCLOSURE

### Technical Problem

The present disclosure is designed to solve the problems of the related art, and therefore the present disclosure is directed to preventing a solution from being solidified at the tip of a spinning nozzle or to preventing the spinning nozzle from being clogged by external contaminants even if the electrospinning process is temporarily interrupted in the middle.

### Technical Solution

The scope of the invention is set out in the appended set of claims.

A nozzle block applied to electrospinning according to a first aspect of the present disclosure for solving the above-described technical problem includes a spinning nozzle having a hollow spinning needle for discharging the spinning solution to the outside; a means of piercing having a diameter smaller than that of the spinning needle, at least one of which is coaxially disposed inside the spinning needle; and a reciprocating mechanism for reciprocating the means of piercing and the spinning needle relative to each other.

In the nozzle block applied to electrospinning according to another second aspect of the present disclosure, the means of piercing is composed of one first means of piercing having an outer diameter smaller than the inner diameter of the spinning needle and coaxially disposed inside the spinning needle.

In the nozzle block applied to electrospinning according to the second aspect of the present disclosure, the first means of piercing is a wire having an outer diameter smaller than the inner diameter of the spinning needle.

In the nozzle block applied to electrospinning according to the first aspect of the present disclosure, the first means of piercing is a piercing nozzle including a hollow piercing needle having an outer diameter smaller than the inner diameter of the spinning needle, wherein a spinning solution supplied to the piercing nozzle passes through the piercing needle and is discharged to the outside through the spinning needle of the spinning nozzle.

In the nozzle block applied to electrospinning according to the third aspect of the present disclosure, the piercing needle is disposed 0.5 mm to 50 mm below from the tip of the spinning needle.

In the nozzle block applied to electrospinning according to another fourth aspect of the present disclosure, the reciprocating mechanism includes a pressing means for lowering the spinning needle so that the piercing needle may penetrate the spinning needle and protrude to the outside; and an elastic means for lifting and restoring the spinning needle lowered by the pressing means to its original position.

Herein, the spinning needle is lowered so that the protruding length of the piercing needle is 1 mm to 15 mm. Also, the elastic means is a spring.

The nozzle block applied to electrospinning according to another fifth aspect of the present disclosure further includes a first nozzle support for supporting and fixing at least two spinning nozzles in a row; and a second nozzle support for supporting and fixing at least two piercing nozzles in a row to correspond to the spinning nozzle fixed to the first nozzle support.

In the nozzle block applied to electrospinning according to the fifth aspect of the present disclosure, the reciprocating mechanism includes a pressing means for lowering the first nozzle support so that the piercing needle may penetrate the spinning needle and protrude to the outside; and an elastic means for lifting and restoring the first nozzle support lowered by the pressing means to its original position.

In the nozzle block applied to electrospinning according to the fifth aspect of the present disclosure, the elastic means is a spring disposed between the first nozzle support and the second nozzle support.

In the nozzle block applied to electrospinning according to another sixth aspect of the present disclosure, the reciprocating mechanism is a means of reciprocating for reciprocating the first nozzle support vertically in order to relatively lower the spinning needle with respect to the piercing needle or to upwardly restore the spinning needle to its original position so that the piercing needle may penetrate the spinning needle and protrude to the outside.

In the nozzle block applied to electrospinning according to the sixth aspect of the present disclosure, the means of reciprocating includes a motor capable of forward and reverse control; a motion conversion mechanism for converting the forward and reverse rotational motion of this motor into linear motion; and a reciprocating drive mechanism for reciprocating the first nozzle support up and down according to the linear motion.

In the nozzle block applied to electrospinning according to the sixth aspect of the present disclosure, the means of reciprocating is a pneumatic system.

In the nozzle block applied to electrospinning according to another seventh aspect of the present disclosure, the means of piercing further includes a second means of piercing having an outer diameter smaller than the inner diameter of the piercing needle and coaxially disposed inside the piercing needle.

In the nozzle block applied to electrospinning according to another eighth aspect of the present disclosure, the second means of piercing is a wire having an outer diameter smaller than the inner diameter of the piercing needle and coaxially disposed inside the piercing needle.

In the nozzle block applied to electrospinning according to another ninth aspect of the present disclosure, the second means of piercing is a solvent injection nozzle having an outer diameter smaller than the inner diameter of the piercing needle and having a hollow solvent injection needle coaxially disposed inside the piercing needle.

In the nozzle block applied to electrospinning according to the ninth aspect of the present disclosure, the tip of the solvent injection needle is disposed 1 mm to 10 mm below from the tip of the piercing needle.

In the nozzle block applied to electrospinning according to the ninth aspect of the present disclosure, the tip of the solvent injection needle is positioned 1 mm to 10 mm below from the tip of the spinning needle so that the tip of the solvent injection needle is disposed between the tip of the piercing needle and the tip of the spinning needle.

The nozzle block applied to electrospinning according to another tenth aspect of the present disclosure further includes a cleaning solvent storage tank for storing a cleaning solvent to be supplied to the solvent injection nozzle.

The nozzle block applied to electrospinning according to another eleventh aspect of the present disclosure further includes a first nozzle support for supporting and fixing at least two spinning nozzles in a row; a second nozzle support for supporting and fixing at least two piercing nozzles in a row to correspond to the spinning nozzle fixed to the first nozzle support; and a third nozzle support for supporting and fixing at least two solvent injection nozzles in a row to correspond to the piercing nozzle fixed to the second nozzle support.

In the nozzle block applied to electrospinning according to another twelfth aspect of the present disclosure, the reciprocating mechanism includes a first means of reciprocating for reciprocating the first nozzle support vertically in order to relatively lower the spinning needle with respect to the piercing needle or to upwardly restore the spinning needle to its original position so that the piercing needle may penetrate the spinning needle and protrude to the outside; and a second means of reciprocating for reciprocating the third nozzle support vertically in order to raise the solvent injection needle or to lower the solvent injection needle to its original position so that the solvent injection needle may penetrate the spinning needle or the piercing needle and protrude.

In the nozzle block applied to electrospinning according to the twelfth aspect of the present disclosure, the first means of reciprocating includes a motor capable of forward and reverse control; a motion conversion mechanism for converting the forward and reverse rotational motion of this motor into linear motion; and a reciprocating drive mechanism for reciprocating the first nozzle support up and down according to the linear motion.

In the nozzle block applied to electrospinning according to the twelfth aspect of the present disclosure, the first means of reciprocating is a pneumatic system.

In the nozzle block applied to electrospinning according to the twelfth aspect of the present disclosure, the second means of reciprocating includes a handle for generating the forward and reverse rotational power; and a reciprocating transfer mechanism for reciprocating the third nozzle support up and down by converting the forward and reverse rotational motion of this handle into linear motion.

In the nozzle block applied to electrospinning according to the twelfth aspect of the present disclosure, the second means of reciprocating is a motor drive system capable of forward and reverse control.

In the nozzle block applied to electrospinning according to the twelfth aspect of the present disclosure, the second means of reciprocating is a pneumatic system.

The nozzle block applied to electrospinning according to another thirteenth aspect of the present disclosure further includes a cleaning spray nozzle for removing deposits attached to the tip of the spinning needle by spraying a solvent to the outside of the tip of the spinning needle.

The nozzle block applied to electrospinning according to another thirteenth aspect of the present disclosure further includes at least one cleaning spray nozzle for removing deposits attached to the tip of the spinning needle by spraying a solvent to the outside of the tip of the spinning needle.

The nozzle block applied to electrospinning according to the thirteenth aspect of the present disclosure further includes a transfer table for reciprocating the cleaning spray nozzle along the first nozzle support.

An electrospinning device according to the first aspect of the present disclosure includes an unwinder for unwinding a roll on which a substrate for stacking nanofibers by spinning a spinning solution is wound; a winder for winding the substrate on which the nanofibers are stacked; a nozzle block according to any one selected from the first to thirteenth aspects described above; a collector for stacking nanofibers radiated from the nozzle block while transferring the substrate; a solution storage tank for storing the spinning solution; a solution transfer mechanism for transferring the solution in the solution storage tank to the nozzle block; and a high voltage power supply for applying a high voltage to the spinning solution discharged from the spinning needle of the nozzle block.

The electrospinning device according to the fourteenth aspect of the present disclosure further includes a robot driving unit for reciprocating the nozzle block in the width direction of the substrate; and a spinning distance control unit for adjusting the distance between the collector and the tip of the spinning needle.

The electrospinning device according to the fourteenth aspect of the present disclosure further includes a hot air generator for making fine nanofibers by volatilizing a solvent from a large amount of the spun filaments radiated from the spinning needles of the nozzle block; a humidity control device for controlling the solvent volatilization speed by adjusting internal humidity; and a lamination device for controlling the bonding state of the nanofibers configured on the substrate.

The electrospinning device according to the fourteenth aspect of the present disclosure further includes a video camera for monitoring in real time the solidified state or clogged state of the spinning solution formed at the tip of the spinning needle, or the droplet state of the Taylor cone formed at the tip of the spinning needle.

### Advantageous Effects

According to the present disclosure, the clogging of the spinning nozzle may be prevented even if the nanofiber manufacturing process is temporarily interrupted in the middle. In consequence, first, the nanofiber manufacturing process may be continuously regenerated, and second, the labor and cost required for replacing the nozzle may be significantly reduced compared to the prior art.

In addition, by spraying a solvent to the outside of the tip of the spray nozzle using a cleaning spray nozzle, the problem of clogging the nozzle tip due to the agglomerates deposited on the tip may also be solved.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG 1 is a cross-sectional perspective view illustrating a spinning state of a nozzle block according to a first embodiment of the present disclosure.
FIG 2 is a cross-sectional perspective view illustrating a cleaning state of a nozzle block according to a first embodiment of the present disclosure.
FIG 3 is a longitudinal cross-sectional view illustrating another modified embodiment of a nozzle block according to a first embodiment of the present disclosure.
FIG 4 is an exploded perspective view illustrating a nozzle block according to a second embodiment of the present disclosure.
FIG 5 is a front perspective view illustrating a nozzle block according to a second embodiment of the present disclosure.
FIG 6 is a rear perspective view illustrating a nozzle block according to a second embodiment of the present disclosure.
FIG 7 is an operation state diagram illustrating a spinning state of a nozzle block according to a second embodiment of the present disclosure.
FIG 8 is an operation state diagram illustrating a cleaning state of a nozzle block according to a second embodiment of the present disclosure.
FIG 9 is a perspective view illustrating a nozzle block according to a third embodiment of the present disclosure.
FIG 10 is a partially enlarged view illustrating one form of Dz in FIG 9.
FIG 11 is a partially enlarged view illustrating another form of Dz in FIG 9.
FIG 12 is a view illustrating a bottom-up roll-to-roll electrospinning device according to a preferred embodiment of the present disclosure.

### BEST MODE

Hereinafter, the embodiments of the present disclosure will be described in more detail with reference to the accompanying drawings. The embodiments of the present disclosure may be modified in many forms, and the scope of the present disclosure should not be interpreted as being limited to the following embodiments. These embodiments are provided to help those skilled in the art to understand the present disclosure fully and completely. Although specific terms are used in the accompanying drawings and the present disclosure, this is used to describe the present disclosure, but not intended to limit the meaning or the scope of the present disclosure defined in the appended claims. Therefore, those skilled in the art will understand that a variety of modifications and equivalents may be made thereto. Accordingly, the true technical protection scope of the present disclosure should be defined by the technical aspects of the appended claims.

Hereinafter, preferred embodiments of the present disclosure will be described in detail with reference to the accompanying drawings. The accompanying drawings are not shown by the scale, and in each drawing, like reference numeral denotes like element.

In the present disclosure, at least one means of piercing which has a diameter smaller than the inner diameter of the spinning nozzle in order to prevent the solution from being solidified at the tip of the spinning nozzle even if the electrospinning process is temporarily interrupted in the middle is coaxially disposed inside the spinning nozzle, and the spinning nozzle is cleaned by piercing the clogging of the tip of the spinning nozzle through reciprocating the means of piercing and the spinning nozzle relative to each other.

To this end, the present disclosure may have a double tube structure by coaxially disposing a first means of piercing having a diameter smaller than the inner diameter of the spinning nozzle inside the spinning nozzle, or a triple tube structure by continuously coaxially disposing a second means of piercing having a diameter smaller than the inner diameter of the first means of piercing inside the first means of piercing.

The first means of piercing and the second means of piercing may be composed of a nozzle having the same shape as a spinning nozzle, or a wire or a needle having a small diameter.

In addition, the present disclosure includes a first means of reciprocating for relatively reciprocating the first means of piercing with respect to the spinning nozzle. The present disclosure also includes a second means of reciprocating for relatively reciprocating the second means of piercing with respect to the spinning nozzle or the first means of piercing.

The first means of reciprocating or the second means of reciprocating may be a manual reciprocating drive mechanism including a pressure bar and a spring, or an automatic reciprocating drive mechanism using a motor or pneumatic pressure.

In addition, the present disclosure may further include a cleaning spray nozzle for intensively spraying a cleaning solvent into the tip portion of the spinning nozzle in order to more reliably clean the tip portion of the spinning nozzle.

Hereinafter, a plurality of embodiments and modifications for specifically implementing the technical solution principle of the present disclosure described above will be described in detail with reference to the drawings.

### <FIRST EMBODIMENT>

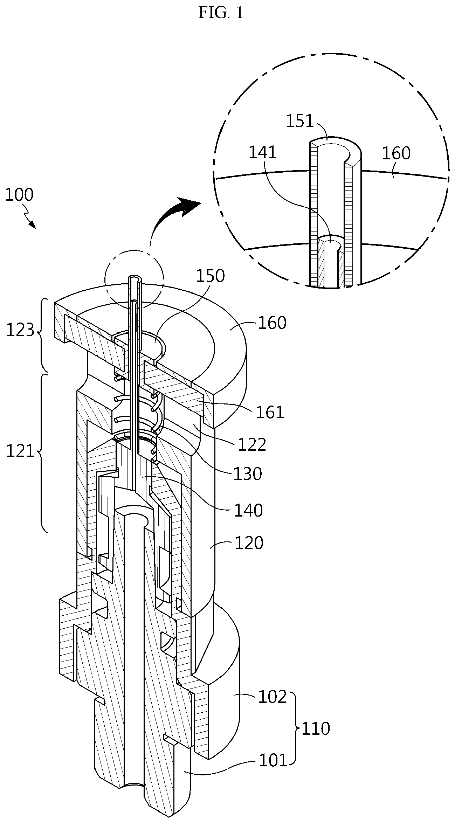

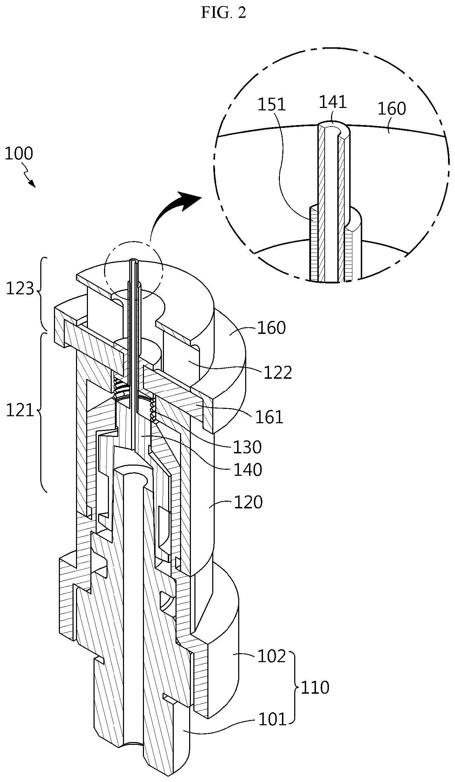

FIG 1 is a cross-sectional perspective view illustrating a spinning state of a nozzle block according to a first embodiment of the present disclosure, and FIG 2 is a cross-sectional perspective view illustrating a cleaning state of a nozzle block according to a first embodiment of the present disclosure.

Referring to FIGS. 1 and 2, a nozzle block 100 for an electrospinning device according to a first embodiment of the present disclosure includes a nozzle adapter 101 for coupling the nozzle to a distribution nozzle body distributing the spinning solution flowing from the electrospinning device, a multi-spinning nozzle body spinning the spinning solution, or a syringe storing the solution; a nozzle body 110 including a nozzle support 102 for coupling the nozzle fastened to the nozzle adapter 101 in closer contact so that there is no leakage and for coupling other necessary external members; a spring housing 120 fastened to the nozzle support 102 while surrounding a portion of the upper end of the nozzle support 102 and holding the spring 130; a piercing nozzle 140 closely coupled to the nozzle adapter 101 by the nozzle support 102 and having a piercing needle 141; a spinning nozzle 150 having an inner diameter larger than the outer diameter of the piercing needle 141 and having a spinning needle 151 coaxially surrounding the piercing needle 141; and a pressing member 160 surrounding a portion of the upper end of the spring housing 120 to press and compress the spring 130 mounted on the spring housing 120.

The nozzle adapter 101 has a tapered shape at a coupling portion with the piercing needle 141. In this case, the nozzle adapter 101 is configured to have a cap composed of a double thread screw having a luer lock structure to facilitate coupling and separation with the piercing needle 141 on the outside thereof, or to have a cap lifting the piercing needle 141 upward. Therefore, the piercing needle 141 is preferably composed of a metal needle having a hub coupled to such a taper.

The spring housing 120 includes a nozzle coupling portion 121 coupled to the nozzle support 102 while surrounding a portion of the upper end of the nozzle support 102 closely coupling the piercing nozzle 140, and a spring mounting portion 123 extending from the nozzle coupling portion 121 and including a guide slot 122 for guiding the pressure bar 161 of the pressing member 160 while holding the spring 130 therein.

The pressing member 160 is a cylindrical sleeve surrounding the spring mounting portion 123 of the spring housing 120, and includes the pressure bar 161 disposed in the guide slot 122 to compress the spring 130. The spring 130 is mounted in the guide slot 122 between the piercing nozzle 140 and the spinning nozzle 150.

Referring to FIGS. 1 and 2, the piercing needle 141 and the spinning needle 151 are disposed to overlap each other coaxially, so that the nozzle block 100 according to the present disclosure has a double tube needle structure. Therefore, the inner diameter of the spinning needle 151 should be at least larger than the outer diameter of the piercing needle 141.

When the nozzle block 100 according to the first embodiment of the present disclosure is in a state of spinning a polymer solution (spinning solution), the tip of the piercing needle 141 is positioned lower than the tip of the spinning needle 151 as shown in FIG 1, and the spinning needle 151 surrounds the piercing needle 141. Thus, the piercing needle 141 is not visible when viewed from the outside, and only the spinning needle 151 is observed. Accordingly, the polymer solution transferred through the nozzle adapter 101 is jetted from the piercing needle 141 of the piercing nozzle 140 and then discharged to the outside through the tip of the spinning needle 151.

In addition, when the electrospinning process is temporarily interrupted in the middle, the solution may be solidified at the tip of the spinning needle 151 or external contaminants may penetrate, thereby clogging the spinning needle 151. In this case, the operator presses down the pressing member 160 of FIG 1 to lower the pressure bar 161 along the guide slot 122. Accordingly, the spinning nozzle 150 connected to the pressure bar 161 compresses the spring 130 while descending downward. When the spinning nozzle 150 descends in this way, the spinning needle 151 also descends downward, and as shown in FIG 2, the piercing needle 141 hidden inside the spinning needle 151 penetrates the tip of the spinning needle 151 and protrudes to the outside.

When the operator releases the pressing member 160 in a state where the piercing needle 141 penetrates the tip of the spinning needle 151 and protrudes to the outside, the pressure bar 161 rises upward along the guide slot 122 by the restoring force of the spring 130, and the spinning nozzle 150 connected to the pressure bar 161 also rises upward accordingly. As the spinning nozzle 150 rises upward in this way, the spinning needle 151 rises to its original position, so that the piercing needle 141 is hidden inside the spinning needle 151 as shown in FIG 1.

As the operator repeats pressing and releasing the pressing member 160 at least once, the piercing needle 141 reciprocates vertically based on the tip of the spinning needle 151 to clear tip clogging caused by solution solidification or contaminants at the tip of the spinning needle 151. In particular, when the spinning solution is discharged through the piercing needle 141 during the relative vertical reciprocating motion of the piercing needle 141 and the spinning needle 151, it is possible to clean the tip of the spinning needle 151 more cleanly.

### <MODIFIED EMBODIMENT>

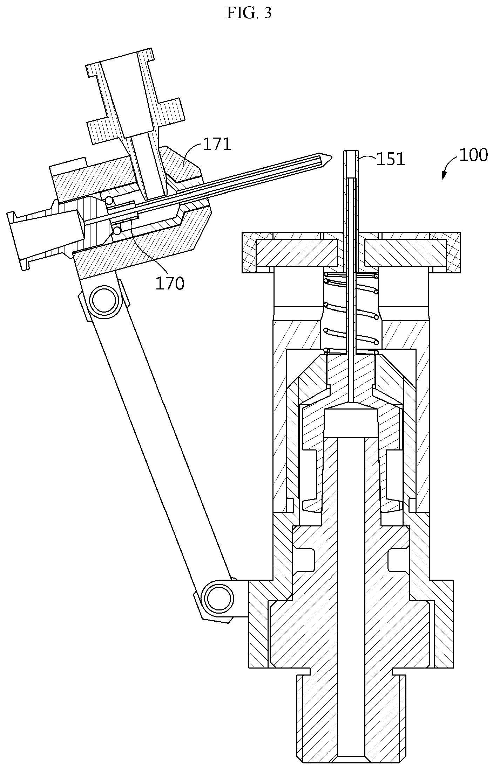

FIG 3 is a longitudinal cross-sectional view illustrating another modified embodiment of a nozzle block according to a first embodiment of the present disclosure.

Referring to FIG 3, this modified embodiment is substantially the same in configuration as the embodiments of FIGS. 1 and 2, and further includes a separate cleaning spray nozzle 170.

The cleaning spray nozzle 170 is installed in the nozzle body 110 to clean the deposits existing outside the tip of the spinning needle 151. The cleaning spray nozzle 170 is a two-fluid spray nozzle composed of a coaxial double tube and is mounted on the nozzle holder 171. The cleaning spray nozzle 170 moves in the direction of the nozzle by the nozzle holder 171 and sprays the solvent onto the tip of the spinning needle 151 to remove deposits attached to the tip of the spinning needle 151.

As the solvent injected into the cleaning spray nozzle 170, a solvent used for preparing a general solution may be employed. The solvent is injected into the inner nozzle of the double tube provided in the cleaning spray nozzle 170, and gas such as air or nitrogen is injected into the outer nozzle of the double tube to atomize the solvent. The inner diameter of the inner nozzle of the cleaning spray nozzle 170 is 0.1 mm to 0.5 mm, and the inner diameter of the outer nozzle is preferably 0.30 mm to 1.5 mm. The interval of the portions into which the gas is injected, that is, the distance between the outer surface of the inner nozzle and the inner surface of the outer nozzle, is preferably 0.05 mm to 0.3 mm. When the interval is greater than 0.3 mm, the amount of air or gas supplied is large, resulting in a problem that the scattering amount of the solution is increased. The supply pressure of the gas is preferably 1-7 kg/cm²(bar). The solvent discharge amount is preferably 10 µl/min to 500 µl/min. It is preferable that the particles atomized by spraying have a diameter of 1 µm to 100 µm. The injection direction of the cleaning spray nozzle 170 is set to face the tip of the spinning needle 151 through which the electrospinning solution is discharged.

To this end, the cleaning spray nozzle 170 is installed at an interval of 2 mm to 10 mm from the lower end of the tip of the spinning needle 151. Preferably, the cleaning spray process may be performed in a state in which a high voltage having a voltage polarity opposite to that of the electrospinning process is applied to the cleaning spray nozzle 170. The solvent sprayed from the cleaning spray nozzle 170 flows down along the surface of the spinning needle 151 to remove deposits present in the tip.

When the electrospinning process is temporarily interrupted and then restarted, the piercing needle 141 physically pierces the clogged portion of the tip of the spinning needle 151 as shown in FIG 2 through the relative reciprocating motion of the piercing needle 141 and the spinning needle 151 and then returns to its original position as shown in FIG 1 by the restoring force of the spring 130. Subsequently, the cleaning spray nozzle 170 is operated to spray the solvent onto the tip of the spinning needle 151, thereby cleaning the deposits around the tip.

### <SECOND EMBODIMENT>

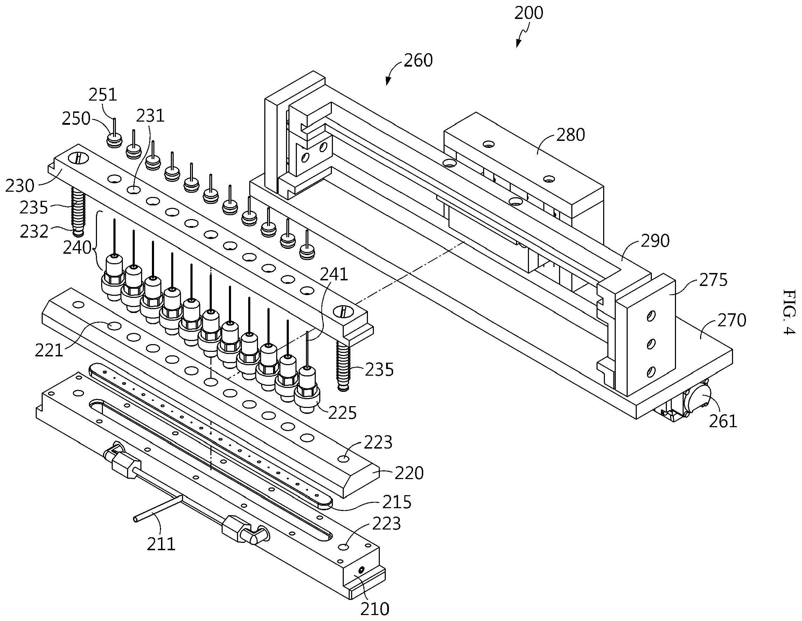

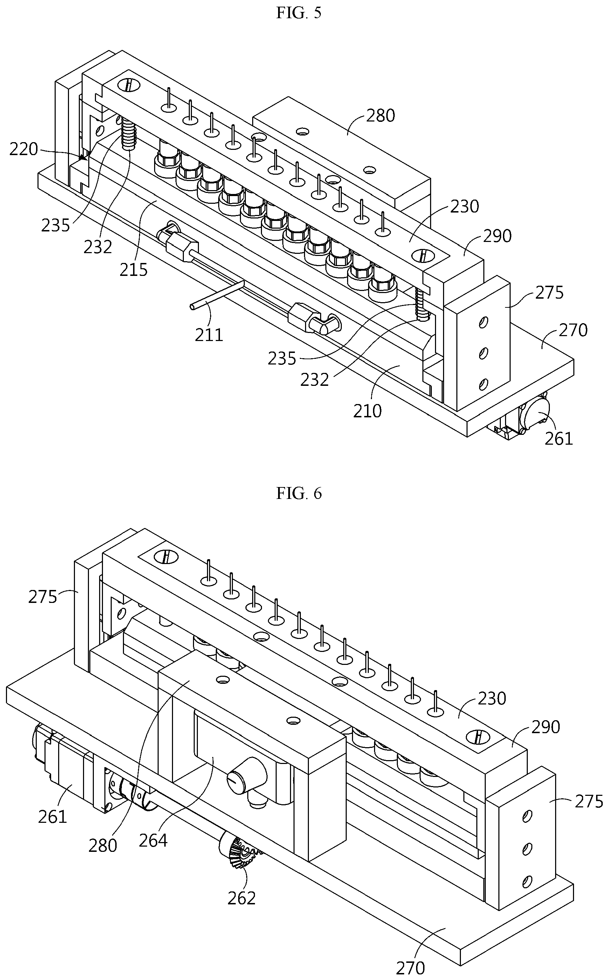

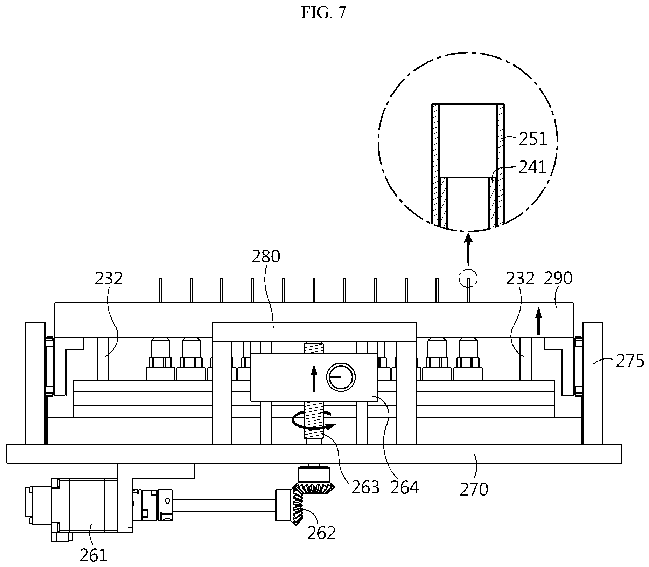

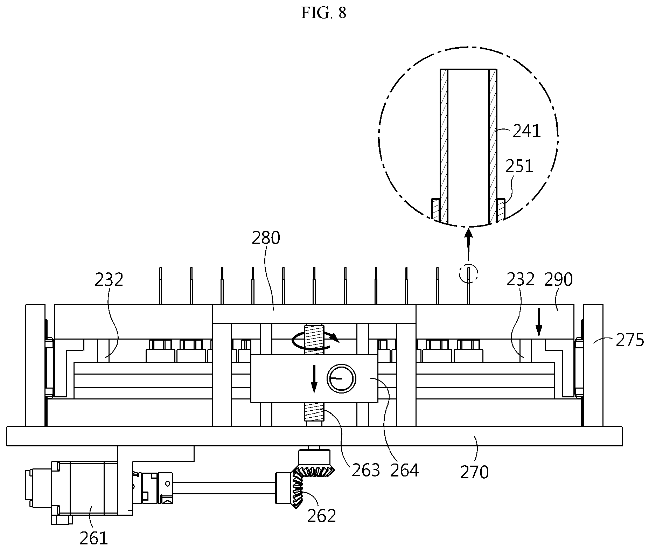

FIG 4 is an exploded perspective view illustrating a nozzle block according to a second embodiment of the present disclosure, FIG. 5 is a front perspective view illustrating a nozzle block according to a second embodiment of the present disclosure, FIG 6 is a rear perspective view illustrating a nozzle block according to a second embodiment of the present disclosure, FIG 7 is an operation state diagram illustrating a spinning state of a nozzle block according to a second embodiment of the present disclosure, and FIG 8 is an operation state diagram illustrating a cleaning state of a nozzle block according to a second embodiment of the present disclosure.

Referring to FIGS. 4 to 6, in the nozzle block 200 for the electrospinning device according to the second embodiment of the present disclosure, unlike the nozzle block 100 of the first embodiment described above, at least two spinning nozzles 250 for discharging the spinning solution are arranged side by side in a row.

The nozzle block 200 according to the second embodiment of the present disclosure includes a solution storage unit 210 having a solution accommodating space for accommodating therein the spinning solution injected from the solution storage tank (not shown) of the electrospinning device through the solution injection hole 211; a distribution plate 215 for distributing the spinning solution accommodated in the solution storage unit 210 to a plurality of piercing nozzles 240; a first nozzle support 220 for supporting and fixing the plurality of piercing nozzles 240 arranged in a row; a second nozzle support 230 for supporting and fixing a plurality of spinning nozzles 250 arranged in a row so as to correspond to the plurality of piercing nozzles 240 in one-to-one correspondence; and a bed device 260 on which the solution storage unit 210, the distribution plate 215, the first nozzle support 220 and the second nozzle support 230 are mounted.

As shown in FIG 6, reciprocating transfer mechanisms for reciprocating the second nozzle support 230 up and down are installed in the bed device 260.

In the first nozzle support 220, a plurality of piercing nozzle fixing holes 221 for inserting and fixing the plurality of piercing nozzles 240 are arranged in a row, and a nozzle adapter 225 for inserting and connecting the piercing nozzle 240 to the piercing nozzle fixing hole 221 is coupled to the lower end of the piercing nozzle 240.

The nozzle adapter 225 has a tapered shape at a coupling portion with the piercing needle 241. In this case, the nozzle adapter 225 is configured to have a cap composed of a double thread screw having a luer lock structure to facilitate coupling and separation with the piercing needle 241 on the outside thereof, or to have a cap lifting the piercing needle 241 upward. Therefore, the piercing needle 241 is preferably composed of a metal needle having a hub coupled to such a taper.

In the second nozzle support 230 disposed at the upper end of the first nozzle support 220, a plurality of spinning nozzle fixing holes 231 for inserting and fixing the plurality of spinning nozzles 250 are arranged in a row, and guide rods 232 for guiding the second nozzle support 230 to reciprocate vertically are installed at both ends thereof.

The guide rod 232 is inserted into the through-holes 223 formed at both ends of the first nozzle support 220 and the solution storage unit 210, respectively, and reciprocates the second nozzle support 230 up and down according to an external driving force.

A spring 235 may be coupled to the guide rod 232. That is, when the external driving force is passively pressed by the operator, the second nozzle support 230 descends downward while the spring 235 is compressed, and when the external driving force disappears, the second nozzle support 230 rises to its original position by the restoring force of the spring 235. That is, when there is no separate driving means such as a motor or an air compressor described above, the spring 235 may be coupled to the guide rod 232 to manually reciprocate the second nozzle support 230 up and down.

Meanwhile, a piercing needle 241 is mounted on the piercing nozzle 240, and a spinning needle 251 is mounted on the spinning nozzle 250. In this case, the inner diameter of the spinning needle 251 should be at least larger than the outer diameter of the piercing needle 241. Accordingly, when the first nozzle support 220 in which the plurality of piercing nozzles 240 are arranged in a row and the second nozzle support 230 in which the plurality of spinning nozzles 250 are arranged in a row are coupled to each other, the piercing needle 241 is inserted into the spinning needle 251, and thus the piercing needle 241 is coaxially disposed inside the spinning needle 251 to overlap each other, thereby forming a double tube needle structure. Therefore, when the nozzle block 200 according to the second embodiment of the present disclosure is in a state of spinning a polymer solution (spinning solution), the tip of the piercing needle 241 is positioned lower than the tip of the spinning needle 251 as shown in FIG 7, and the spinning needle 251 surrounds the piercing needle 241. Thus, the piercing needle 241 is not visible when viewed from the outside, and only the spinning needle 251 is observed. Accordingly, the polymer spinning solution distributed and transferred to each of the piercing nozzles 240 through the distribution plate 215 is jetted from the piercing needle 241 and then discharged to the outside through the tip of the spinning needle 251.

In addition, when the electrospinning process is temporarily interrupted in the middle, the solution may be solidified at the tip of the spinning needle 251 or external contaminants may penetrate, thereby clogging the spinning needle 251. In this case, the second nozzle support 230 is lowered along the guide rod 232 to lower the spinning nozzles 250. When the spinning nozzles 250 descend in this way, the spinning needle 251 also descends downward, and as shown in FIG 8, the piercing needle 241 hidden inside the spinning needle 251 penetrates the tip of the spinning needle 251 and protrudes to the outside.

When the second nozzle support 230 is raised along the guide rod 232 in a state where the piercing needle 241 penetrates the tip of the spinning needle 251 and protrudes to the outside, the spinning nozzles 250 also rise upward and return to their original position. As the spinning nozzles 250 rise upward in this way, the spinning needle 251 also rises, and as shown in FIG 7, the piercing needle 241 is hidden inside the spinning needle 251 again.

As the second nozzle support 230 is reciprocated up and down one or more times, the piercing needle 241 reciprocates vertically based on the tip of the spinning needle 251 to clear tip clogging caused by solution solidification or contaminants at the tip of the spinning needle 251. In particular, when the spinning solution is discharged through the piercing needle 241 during the relative vertical reciprocating motion of the piercing needle 241 and the spinning needle 251, it is possible to clean the tip of the spinning needle 251 more cleanly.

As a driving mechanism for reciprocating the second nozzle support 230 up and down along the guide rod 232, both a manual driving mechanism and an automatic driving mechanism may be adopted.

First, the manual driving mechanism is achieved by installing the springs 235 on the guide rods 232 present at both ends of the second nozzle support 230 as shown in FIG 4. In addition, the automatic driving mechanism is to install a separate driving means such as a motor or an air compressor in the bed device 260.

Hereinafter, an embodiment in which a motor is installed as the automatic driving mechanism will be described with reference to FIGS. 6 to 8.

Referring to FIGS. 6 to 8, a motor 261 is installed under the base plate 270 of the bed device 260, and the forward and reverse rotational motion (clockwise or counterclockwise) by forward and reverse control of the motor 261 is transmitted to the lead screw 263 via a bevel gear 262 for transmission to the intersecting axis. The lead screw 263 converts forward and reverse rotational motion into linear reciprocating motion, and the transfer plate 264 coupled to the lead screw 263 reciprocates up and down according to the linear reciprocating motion. In addition, the reciprocating radius of the lead screw 263 and the transfer plate 264 is limited by the limiting frame 280.

Meanwhile, the solution storage unit 210, the distribution plate 215, the first nozzle support 220 and the second nozzle support 230 are mounted on the base plate 270 of the bed device 260, and particularly, the second nozzle support 230 is fixedly installed on the carriage 290 connected to the head stock 275 installed at both ends of the base plate 270. The carriage 290 is connected to the transfer plate 264, and thus, as the transfer plate 264 reciprocates up and down, the carriage 290 also reciprocates up and down based on the head stock 275.

Accordingly, the second nozzle support 230 fitted into the carriage 290 also reciprocates up and down along the carriage 290, and the spinning needles 251 of the spinning nozzle 250 inserted and fixed to the second nozzle support 230 also reciprocate relatively up and down with respect to the piercing needle 241.

Referring to FIG 7, when the rotational motion in the counterclockwise direction (refer to the arrow) transmitted from the motor 261 is converted into a linear reciprocating motion through the lead screw 263 and the transfer plate 264 rises upward, the carriage 290 connected to the transfer plate 264 rises upward based on the head stock 275, resulting in raising the second nozzle support 230 upward.

Meanwhile, referring to FIG 8, when the rotational motion in the clockwise direction (refer to the arrow) transmitted from the motor 261 is converted into a linear reciprocating motion through the lead screw 263 and the transfer plate 264 descends downward, the carriage 290 connected to the transfer plate 264 descends downward based on the head stock 275, resulting in lowering the second nozzle support 230 downward.

### <MODIFIED EMBODIMNET>

The nozzle block 200 according to the second embodiment of the present disclosure may also be deformed to further include the cleaning spray nozzle 170 of FIG 3 like the nozzle block 100 according to the first embodiment of the present disclosure. In this case, the cleaning spray nozzle 170 of FIG 3 may be configured such that a separate transfer table (not shown) is installed between the head stock 275 of FIG 4, and the cleaning spray nozzle 170 clean the tips of a plurality of spinning needles 251 while reciprocating the transfer table. Of course, it is also possible to allocate and arrange the cleaning spray nozzle 170 of FIG 3 in one-on-one for each individual spinning nozzle 250.

### <THIRD EMBODIMNET>

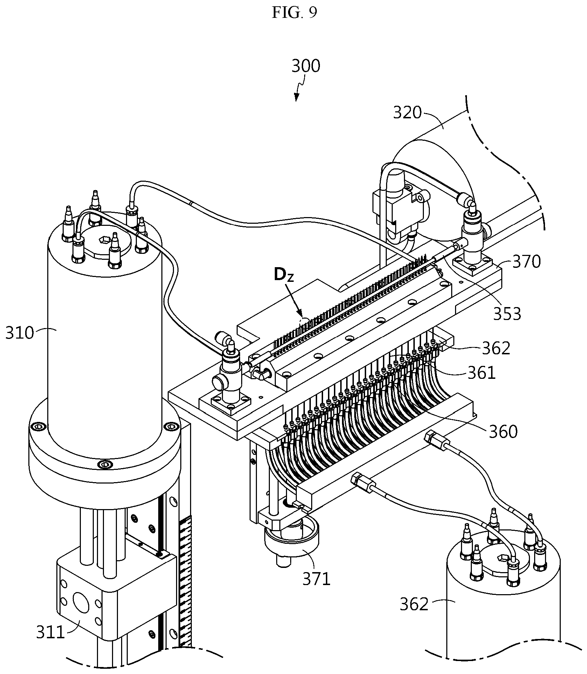

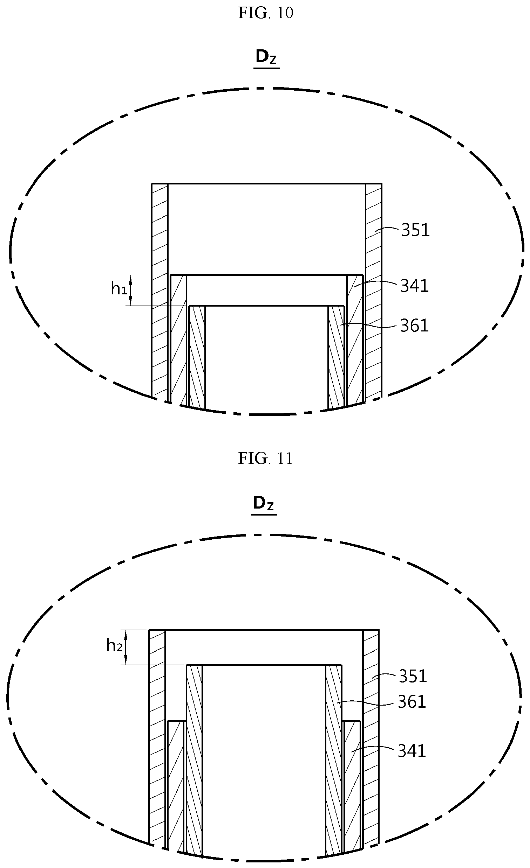

FIG 9 is a perspective view illustrating a nozzle block according to a third embodiment of the present disclosure, FIG 10 is a partially enlarged view illustrating one form of Dz in FIG 9, and FIG 11 is a partially enlarged view illustrating another form of Dz in FIG 9.

Referring to FIG 9, in the nozzle block 300 for the electrospinning device according to the third embodiment of the present disclosure, the spinning nozzles for discharging the spinning solution are integrated and arranged at a higher density compared to the nozzle block 200 of the second embodiment described above. In addition, the nozzle block 300 according to the third embodiment of the present disclosure has a triple tube needle structure by further including a separate solvent injection needle inside the piercing needle disposed inside the spinning needle, rather than a double tube needle structure in which the piercing needle is coaxially overlapped inside the spinning needle.

In the nozzle block 300 for the electrospinning device according to the third embodiment of the present disclosure, a plurality of spinning nozzles and a plurality of piercing nozzles are also mounted on the bed device in a state in which they are fixedly arranged in a row at high density on the first and second nozzle supports, as in the second embodiment of the present disclosure.

However, the nozzle block 300 according to the third embodiment of the present disclosure is different from the nozzle block 200 according to the second embodiment in that a separate solvent injection nozzle 360 is added as shown in FIG 9. That is, the nozzle block 200 according to the second embodiment has a double tube needle structure in which the piercing needle and the spinning needle are coaxially overlapped, but the nozzle block 300 according to the third embodiment has a triple tube needle structure in which the piercing needle 341, the spinning needle 351 and the solvent injection needle 361 are coaxially overlapped as shown in FIGS. 10 and 11. That is, the inner diameter of the spinning needle 351 is at least larger than the outer diameter of the piercing needle 341, and the inner diameter of the piercing needle 341 is at least larger than the outer diameter of the solvent injection needle 361.

The spinning needle 351 is configured to be coupled to the reciprocating rod 353 by welding, wherein the spacing between the needles is preferably configured in the range of 2 mm to 20 mm.

Meanwhile, the solvent injection nozzle 360 including the solvent injection needle 361 is connected to the solvent storage tank 380, and when necessary, the cleaning solvent is supplied from the solvent storage tank 380 and discharged through the solvent injection needle 361. In addition, a plurality of the solvent injection nozzles 360 are arranged in a row at high density parallel to the third nozzle support 362 so as to correspond to the piercing nozzle fixed to the second nozzle support in one-on-one, and are supported and fixed. Accordingly, as the third nozzle support 362 is reciprocated up and down by a manual drive mechanism such as a manual handle 371 or an automatic drive mechanism such as a motor or an air compressor, the solvent injection needle 361 also reciprocates relatively up and down with respect to the spinning needle 351 or the piercing needle 341.

The manual handle 371 is a handle that an operator may turn in the clockwise and counterclockwise direction, and the clockwise or counterclockwise rotational motion generated by the manual handle 371 is converted into a linear reciprocating motion by a motion conversion means such as a lead screw and then the third nozzle support 362 reciprocates up and down according to the linear reciprocating motion.

For the vertical reciprocating movement of the third nozzle support 362, not only a manual drive mechanism using the manual handle 371, but also a drive mechanism by a motor of the second embodiment or a drive mechanism using an air compressor may be adopted.

FIG. 10 is a partially enlarged view illustrating one form of Dz in FIG 9, and FIG 11 is a partially enlarged view illustrating another form of Dz in FIG 9.

Referring to FIGS. 10 and 11, the nozzle block 300 according to the third embodiment of the present disclosure has a triple tube needle structure in which a solvent injection needle 361, a piercing needle 341, and a spinning needle 351 are sequentially overlapped and disposed in a coaxial manner.

Herein, the solvent injection needle 361 may be disposed near the tip of the piercing needle 341 or being spaced apart from the tip of the piercing needle 341 by about h1 downwards as shown in FIG 10, or disposed between the tip of the spinning needle 351 and the tip of the piercing needle 341 being spaced apart from the tip of the spinning needle 351 by about h2 downwards as shown in FIG 11. It is preferable that the h1 and h2 are 1 mm to 10 mm.

When the inner diameter of the spinning needle 351 is small, the solvent injection needle 361 may be formed of a spring wire or a straight wire without twisting instead of a hollow needle as shown in FIGS. 10 and 11.

Therefore, during the electrospinning process, the spinning solution in the spinning solution storage tank 310 is discharged to the outside from the tip of the spinning needle 351 through the piercing needle 341 using a solution pump 311. When the spinning needle 351 is blocked, the reciprocating rod 353 is lowered by a pneumatic device 320, and the spinning needle 351 fixed to the reciprocating rod 253 is also lowered, so that the piercing needle 341 penetrates the tip of the spinning needle 351 to protrude the outside. Meanwhile, when the reciprocating rod 253 is raised to its original position using the pneumatic device 320, the spinning needle 351 fixed to the reciprocating rod 253 also rises to its original position, and thus the piercing needle 341 is hidden back inside the spinning needle 351.

Thus, as the reciprocating rod 253 is reciprocated up and down by using the pneumatic device 320, the piercing needle 341 is relatively reciprocated up and down with respect to the spinning needle 351. Accordingly, the solidification of the solvent blocking the tip of the spinning needle 351 or clogging caused by external contaminants is physically pierced by the piercing needle 341.

It is preferable that the reciprocating rod 353 in which the spinning nozzles are arranged in a row at high density and inserted to be fixed is made of a SUS-based, copper-based, or aluminum-based conductive material. When the reciprocating rod 353 is made of a conductive material in this way, it is possible to prevent the filaments radiated from both ends of the spinning needle 351 due to the formation of an electric field generated at both ends of the spinning needle 351 from being spread to the outside.

Meanwhile, when the piercing needle 341 is blocked or both the piercing needle 341 and the spinning needle 351 are blocked during the electrospinning process, it is possible to pierce the blocked piercing needle 341 or the spinning needle 351 by reciprocating up and down the solvent injection needle 361 using the manual handle 371. In this case, it is possible to clean the piercing needle 341 or the spinning needle 351 more cleanly by injecting the cleaning solvent in the cleaning solvent storage tank 362 through the solvent injection needle 361.

### <MODIFIED EMBODIMENT>

The nozzle block 300 according to the third embodiment of the present disclosure may also be deformed to further include the cleaning spray nozzle 170 of FIG 3 like the nozzle block 100 according to the first embodiment of the present disclosure. In this case, the cleaning spray nozzle 170 of FIG 3 may be configured such that a separate transfer table (not shown) is installed in the nozzle block 300 of FIG 9, and the cleaning spray nozzle 170 clean the tips of a plurality of spinning needles 351 while reciprocating the transfer table. Of course, it is also possible to allocate and arrange the cleaning spray nozzle 170 of FIG 3 in one-on-one for each individual spinning nozzle 351.

The triple tube needle structure of FIGS. 10 and 11 may be applied not only to the nozzle block 300 of the third embodiment but also to the nozzle block 100 of the first embodiment and the nozzle block 200 of the second embodiment as it is through simple design changes. Although the solvent injection needle as shown in FIGS. 10 and 11 is not illustrated in the nozzle block 100 of the first embodiment and the nozzle block 200 of the second embodiment, it is easy to add the solvent injection needle to the inside of the piercing needle through a simple structural change, and thus the solvent injection needle is not separately shown in the drawing.

The piercing needles 141, 241, 341 applied to the nozzle blocks 100, 200, 300 of the first to third embodiments of the present disclosure described above are formed of hollow needles having an inner diameter of 0.1 mm to 2.5 mm and an outer diameter of 0.2 mm to 3 mm, or tubing. In addition, the piercing needles 141, 241, 341 preferably have a length of 5 mm to 500 mm, and may be made of stainless steel (SUS), copper-based material, quartz tube, silica, or poly(etheretherketone) (PEEK). The most preferred form of the piercing needles 141, 241, 341 according to the present disclosure is a SUS-based metal hollow needle.

In addition, the spinning needles 151, 251, 351 applied to the nozzle blocks 100, 200, 300 of the first to third embodiments of the present disclosure described above are formed of hollow needles having an inner diameter of 0.21 mm to 3.1 mm and an outer diameter of 0.25 mm to 3.5 mm. Herein, the inner diameter of the spinning needles 151, 251, 351 is preferably configured to be 0.02 mm to 0.3 mm larger than the outer diameter of the piercing needles 141, 241, 341. Therefore, the interval between the inner diameter of the spinning needles 151, 251, 351 and the outer diameter of the piercing needles 141, 241, 341 is preferably maintained at 0.02-0.3 mm, more preferably the interval is maintained at 0.01-0.15 mm. In this case, when the interval between the outer diameter of the piercing needles 141, 241, 341 and the inner diameter of the spinning needles 151, 251, 351 is 0.15 mm or more, the spinning solution discharged from the piercing needles 141, 241, 341 may leak to the lower end of the spinning needles 151, 251, 351.

Also, it is preferable that the tip of the piercing needles 141, 241, 341 is disposed 0.5 mm to 50 mm below from the tip of the spinning needles 151, 251, 351.

In addition, when the piercing needles 141, 241, 341 protrude through the tip of the spinning needles 151, 251, 351 according to the descent of the spinning needles 151, 251, 351, the spinning needles 151, 251, 351 and the piercing needles 141, 241, 341 are disposed so that the protrusion length is 1 mm to 15 mm, preferably 1 mm to 10 mm.

The spinning needles 151, 251, 351 have a length of 1-500 mm, and preferably are made of SUS-based metal or tubing of non-metallic materials such as silica, PEEK-coated silica, poly(etheretherketone) (PEEK), fluorine-based polymer, polyethylene-based polymer, and polypropylene-based polymer.

For the fluorine-based polymer described above, poly(tetrafluoroethylene) (PTFE), ethylene-tetrafluoroethylene (ETFE), ethylene-chlorotrifluoroethylene (ECTFE), poly(chlorotrifluoroethylene) (PCTFE), fluorinated ethylene propylene (FEP), perfluoro alkoxy alkane (PFA), and the like are applicable.

Also, the solvent injection needle 361 applied to the nozzle blocks 100, 200, 300 according to the first to third embodiments of the present disclosure described above is made of SUS-based metal.

When the nozzle blocks 100, 200, 300 according to the first to third embodiments of the present disclosure are implemented with a double tube needle structure of a piercing needle and a spinning needle, it is preferable to design the inner diameter and outer diameter of each hollow needle as shown in Table 1 below.

**[Table 1]**

| | Spinning needle | | Piercing Needle | |
|---|---|---|---|---|
| | Inner Diameter [mm] | Outer Diameter [mm] | Inner Diameter [mm] | Outer Diameter [mm] |
| 13G-15G | 1.90 | 2.41 | 1.26 | 1.65 |
| 14G-17G | 1.82 | 2.10 | 1.23 | 1.50 |
| 15G-18G | 1.37 | 1.83 | 0.86 | 1.26 |
| 16G-19G | 1.26 | 1.65 | 0.68 | 1.07 |
| 17G-19G | 1.23 | 1.50 | 0.68 | 1.07 |
| 18G-21G | 0.86 | 1.26 | 0.50 | 0.80 |
| 19G-23G | 0.68 | 1.07 | 0.33 | 0.63 |
| 20G-25G | 0.60 | 0.90 | 0.26 | 0.50 |
| 21G-26G | 0.50 | 0.80 | 0.21 | 0.45 |
| 22G-28G | 0.41 | 0.70 | 0.18 | 0.36 |
| 23G-30G | 0.33 | 0.63 | 0.16 | 0.31 |
| 24G-31G | 0.31 | 0.54 | 0.13 | 0.26 |
| 25G-32G | 0.26 | 0.50 | 0.10 | 0.23 |

In addition, when the nozzle blocks 100, 200, 300 according to the first to third embodiments of the present disclosure are implemented with a triple tube needle structure of a solvent injection needle, a piercing needle, and a spinning needle, it is preferable to design the inner diameter and outer diameter of each hollow needle as shown in Table 2 below.

**[Table 2]**

| | Spinning needle | | Piercing Needle | | Solvent Injection Needle | |
|---|---|---|---|---|---|---|
| | Inner Diameter [mm] | Outer Diameter [mm] | Inner Diameter [mm] | Outer Diameter [mm] | Inner Diameter [mm] | Outer Diameter [mm] |
| 13G-16G-19G | 1.90 | 2.41 | 1.26 | 1.65 | 0.72 | 1.07 |
| 14G-17G-19G | 1.82 | 2.10 | 1.23 | 1.65 | 0.86 | 1.26 |
| 16G-19G-23G | 1.26 | 1.65 | 0.68 | 1.07 | 0.33 | 0.63 |
| 17G-19G-25G | 1.23 | 1.50 | 0.68 | 1.07 | 0.26 | 0.50 |
| 18G-21G-26G | 0.86 | 1.26 | 0.50 | 0.80 | 0.21 | 0.45 |
| 19G-22G-28G | 0.72 | 1.07 | 0.41 | 0.70 | 0.18 | 0.36 |
| 20G-25G-32G | 0.60 | 0.90 | 0.26 | 0.50 | 0.10 | 0.23 |

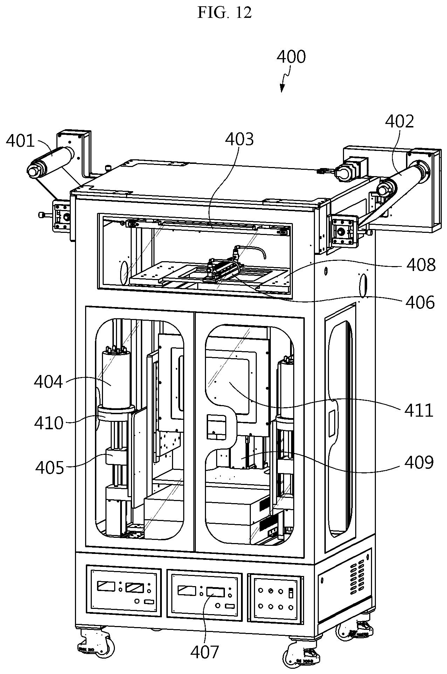

FIG. 12 is a view illustrating a bottom-up roll-to-roll electrospinning device 400 including the nozzle blocks 100, 200, 300 according to the first to third embodiments of the present disclosure. Referring to FIG 12, the bottom-up roll-to-roll electrospinning device 400 according to the present disclosure includes an unwinder unit 401 as an unwinder for unwinding a roll on which a substrate for stacking nanofibers by spinning a spinning solution is wound; a winder unit 402 as a winder for winding a substrate on which the nanofibers are stacked; a nozzle block 406 having a nozzle clogging preventing means according to the first to third embodiments or modified examples thereof described above; a collector 403 for stacking the nanofibers radiated from the nozzle block 406 while transferring the substrate; and a solution storage tank 404 for storing the spinning solution.

In addition, the bottom-up roll-to-roll electrospinning device 400 according to the present disclosure further includes a plunger (not shown) for pushing the solution in the solution storage tank 404; a solution transfer mechanism 410 including a solution transfer pump 405 for precisely transferring the spinning solution to the nozzle block 406 by operating the plunger; a high voltage power supply 407 for applying a high voltage to the spinning solution to give (+) or (-) polarity charge to the spinning solution in order to make the spinning solution discharged from the spinning needle of the nozzle block 406 into microfibers having a diameter of nanometers (nm) or micrometers (um); a robot driving unit 408 for reciprocating the nozzle block 406 in the width direction of the substrate; and a spinning distance control unit 409 for adjusting the distance between the collector 403 and the tip of the spinning needle.

The solution storage tank 404 is made of an insulating material such as polypropylene (PP), polyethylene (PE), poly(etheretherketone) (PEEK), MC nylon, acetal, or the like having excellent voltage resistance. In particular, it is preferable that the solution storage tank 404 has a double structure in which the inside is made of SUS metal, and MC nylon or PP is formed as a cover on the outside of the SUS metal. The capacity of the solution storage tank 404 is preferably 10ml to 3,000ml.

The solution transfer mechanism 410 may be transformed into a form composed of a motor, a screw connected to a shaft of the motor, a pusher that is fastened to the screw and pushes the plunger located inside the solution storage tank 404, a guide rod connecting the plunger and the pusher, and a linear motion guide for smoothly converting the pusher into a linear motion. Herein, the lead of the screw is 0.5-2 mm, preferably 1 mm. Also, the moving speed of the pusher according to the rotation of the screw preferably has a minimum speed of 1µm/hour to 100µm/hour, and a maximum speed of 1cm/min to 20cm/min. The plunger extrudes the spinning solution while moving forward in the solution storage tank 404 by motor operation from the outside. The plunger may be driven using a pneumatic device instead of a motor.

Also, when the capacity of the solution storage tank 404 is insufficient, the solution transfer pump 405 of the solution transfer mechanism 410 may be placed in two tanks (the first solution transfer pump and the second solution transfer pump) in parallel, and a three-way valve may be configured to transfer the spinning solution.

In addition, the bottom-up roll-to-roll electrospinning device 400 according to the present disclosure may further include a hot air generator 411 for making fine nanofibers by volatilizing a solvent from a large amount of spinning filaments radiated from the spinning needles of the nozzle block 406, a humidity control device (not shown) for controlling the solvent volatilization rate by controlling the internal humidity of the electrospinning device 400, and a lamination device (not shown) for controlling the bonding state of the nanofibers configured in the substrate.

In addition, the bottom-up roll-to-roll electrospinning device 400 according to the present disclosure may further include a video camera (not shown) capable of monitoring in real time the state of solidification or clogging of the spinning solution configured at the tip of the spinning needle, or the droplet state of the Taylor cone formed at the tip of the spinning needle and then saving it as a video or image. This video camera is configured at the lower end of the side surface of the nozzle block 406, and moves back and forth to check the state of the tip of the spinning needle in real time or to take an image.

Hereinafter, the operation of the bottom-up roll-to-roll electrospinning device 400 of the present disclosure will be described.

The spinning solution transferred from the solution storage tank 404 by the solution transfer mechanism 410 is discharged from the spinning needles 151, 251, 351 toward the collector 403 through the piercing needles 141, 241, 341 of the nozzle blocks 100, 200, 300. However, when the spinning needles 151, 251, 351 are clogged during the electrospinning process, a manual drive mechanism (pressing member and spring) or an automatic drive mechanism (motor or pneumatic system) is operated to make the spinning needles 151, 251, 351 reciprocate up and down with respect to the piercing needles 141, 241, 341. Accordingly, the reciprocating piercing operation in which the piercing needles 141, 241, 341 protrude through the tip of the spinning needles 151, 251, 351 and then return to their original position is repeated once or more, thereby removing the clogging of the spinning needles 151, 251, 351. Also, if necessary, the tips of the spinning needles 151, 251, 351 on which the above-described reciprocating piercing operation is completed may be washed and cleaned with a cleaning solvent using the cleaning spray nozzle 170 of FIG 3.

In addition, when the piercing needles 141, 241, 341 as well as the spinning needles 151, 251, 351 are clogged during the electrospinning process, the solvent injection needle 361 is reciprocated up and down to pierce the clogging of the spinning needles 151, 251, 351 or the piercing needles 141, 241, 341. Herein, when the cleaning solvent is injected into the solvent injection needle 361 while reciprocating the solvent injection needle 361 up and down, cleaning of the spinning needles 151, 251, 351 or the piercing needles 141, 241, 341 may be performed more reliably.

In the electrospinning process of the present disclosure, the discharge amount of the spinning solution is 0.5 µl/min to 500 µl/min per spinning needle, preferably 1 µl/min to 100 µl/min, which is preferable for producing nanofibers. A high voltage is applied to the piercing nozzles 140, 240, 340 or the spinning nozzles 150, 250, 350 by the high voltage generator 407, and the magnitude of the voltage may be 0.01 kV/cm to 10 kV/cm, preferably 0.5 kV/cm to 25 kV/cm, based on the distance (cm) between the tip of the spinning needle and the collector.

The collector 403 is composed of a conveyor, multiple rollers, or multiple wires that may rotate together with the substrate, and rotates idle while reducing friction when the substrate is moved. The collector 403 is made of a conductive material such as a metallic material and may be grounded, or a direct current power supply (1 kV to 20 kV) having a polarity opposite to the polarity of a charged solution may be applied. The transfer speed of the substrate is preferably 10 cm/minute to 50 cm/minute. Also, the hot air injected for volatilizing the solvent contained in the charged solution discharged through the spinning needles 151, 251, 351 into the atmosphere is set in the range of a wind speed of 0.1 m/sec to 10 m/sec and a temperature of 20°C to 80°C. The temperature of the hot air is more preferably 30°C to 50°C.

When the electrospinning device of the present disclosure is used, clogging caused by solidification of the solution generated at the tip of the spinning needle due to volatilization of a solvent may be prevented, and thus there is no need to replace the nozzle for a subsequent process, thereby ensuring the continuity of the process.

Although the electrospinning device and the nozzle block applied thereto according to the present disclosure have been described hereinabove and shown in the accompanying drawings, this is provided by way of illustration and the aspects of the present disclosure are not limited to the description and drawings, and a variety of modifications and changes will be made without departing from the technical aspects of the present disclosure.

In addition, it is obvious to those skilled in the art that many substitutions, modifications and changes may be made to the present disclosure without departing from the technical aspects of the present disclosure, and the present disclosure is not limited to the disclosed embodiments and the accompanying drawings.

## Claims

1. An electrospinning device comprising
an unwinder for unwinding a roll on which a substrate for stacking nanofibers by spinning a spinning solution is wound;
a winder for winding the substrate on which the nanofibers are stacked;
a collector for stacking nanofibers spun from a nozzle block while transferring the substrate;
a solution storage tank for storing the spinning solution;
a solution transfer mechanism for transferring the solution in the solution storage tank to the nozzle block;
a high voltage power supply for applying a high voltage to the spinning solution discharged from the spinning needle of the nozzle block, wherein the nozzle block comprises:
a spinning nozzle having a hollow spinning needle for discharging the spinning solution to the outside;
a piercing nozzle comprising a hollow piercing needle having an outer diameter smaller than the inner diameter of the spinning needle and disposed coaxially inside the spinning needle; and
a reciprocating mechanism for reciprocating the piercing needle and the spinning needle relative to each other,
wherein the spinning solution supplied to the piercing nozzle passes through the piercing needle and is discharged to the outside through the spinning needle of the spinning nozzle.

2. The electrospinning device according to claim 1,
wherein the piercing needle is disposed 0.5 mm to 50 mm below from the tip of the spinning needle,
wherein the reciprocating mechanism comprises:
a pressing means for lowering the spinning needle so that the piercing needle may penetrate the spinning needle and protrude to the outside; and
an elastic means for lifting and restoring the spinning needle lowered by the pressing means to its original position, and
wherein the spinning needle is lowered so that the protruding length of the piercing needle is 1 mm to 15 mm.

3. The electrospinning device according to claim 2,
further comprising a solvent injection nozzle having an outer diameter smaller than the inner diameter of the piercing needle and having a hollow solvent injection needle coaxially disposed inside the piercing needle.

4. The electrospinning device according to claim 3,
wherein the tip of the solvent injection needle is positioned 1 mm to 10 mm below from the tip of the spinning needle so that the tip of the solvent injection needle is disposed between the tip of the piercing needle and the tip of the spinning needle.

5. The electrospinning device according to claim 4,
which further comprises:
a first nozzle support for supporting and fixing at least two spinning nozzles in a row;
a second nozzle support for supporting and fixing at least two piercing nozzles in a row to correspond to the spinning nozzle fixed to the first nozzle support; and
a third nozzle support for supporting and fixing at least two solvent injection nozzles in a row to correspond to the piercing nozzle fixed to the second nozzle support.

6. The electrospinning device according to claim 5,
which further comprises:
a first means of reciprocating for reciprocating the first nozzle support vertically in order to relatively lower the spinning needle with respect to the piercing needle or to upwardly restore the spinning needle to its original position so that the piercing needle may penetrate the spinning needle and protrude to the outside; and
a second means of reciprocating for reciprocating the third nozzle support vertically in order to raise the solvent injection needle or to lower the solvent injection needle to its original position so that the solvent injection needle may penetrate the spinning needle or the piercing needle and protrude.

7. The electrospinning device according to claim 6,
wherein the first means of reciprocating comprises:
a motor capable of forward and reverse control;
a motion conversion mechanism for converting the forward and reverse rotational motion of this motor into linear motion; and
a reciprocating drive mechanism for reciprocating the first nozzle support up and down according to the linear motion.

8. The electrospinning device according to claim 6,
wherein the first means of reciprocating and/or the second means of reciprocating comprise a pneumatic system.

9. The electrospinning device according to claim 6,
wherein the second means of reciprocating is a motor drive system capable of forward and reverse control.

10. The electrospinning device according to claim 6,
wherein the second means of reciprocating comprises:
a handle for generating the forward and reverse rotational power; and
a reciprocating transfer mechanism for reciprocating the third nozzle support up and down by converting the forward and reverse rotational motion of this handle into linear motion.

11. The electrospinning device according to claim 6,
which further comprises at least one cleaning spray nozzle for removing deposits attached to the tip of the spinning needle by spraying a solvent to the outside of the tip of the spinning needle.

12. The electrospinning device according to claim 11,
which further comprises a transfer table for reciprocating the cleaning spray nozzle along the first nozzle support.

## Patentansprüche

1. Elektrospinnvorrichtung, umfassend
einen Abwickler zum Abwickeln einer Rolle, auf der ein Substrat zum Aufschichten von Nanofasern durch Spinnen einer Spinnlösung aufgewickelt ist;
einen Aufwickler zum Aufwickeln des Substrats, auf dem die Nanofasern aufgeschichtet sind;
einen Kollektor zum Aufschichten von aus einem Düsenblock gesponnenen Nanofasern, während das Substrat übertragen wird;
einen Lösungsvorratsbehälter zum Bevorraten der Spinnlösung;
einen Lösungsübertragungsmechanismus zum Übertragen der Lösung in dem Lösungsvorratsbehälter zu dem Düsenblock;
eine Hochspannungsstromversorgung zum Anlegen einer Hochspannung an die aus der Spinnnadel des Düsenblocks ausgebrachte Spinnlösung, wobei der Düsenblock Folgendes umfasst:
eine Spinndüse mit einer hohlen Spinnnadel zum Ausbringen der Spinnlösung nach außen;
eine Durchstechdüse, die eine hohle Durchstechnadel umfasst, welche einen Außendurchmesser aufweist, der kleiner als der Innendurchmesser der Spinnnadel ist, und welche koaxial innerhalb der Spinnnadel angeordnet ist; und
einen Hin- und Herbewegmechanismus zum Hin- und Herbewegen der Durchstechnadel und der Spinnnadel relativ zueinander,
wobei die der Durchstechdüse zugeführte Spinnlösung durch die Durchstechnadel hindurchströmt und durch die Spinnnadel der Spinndüse nach außen ausgebracht wird.

2. Elektrospinnvorrichtung nach Anspruch 1,
wobei die Durchstechnadel 0,5 mm bis 50 mm unterhalb von der Spitze der Spinnnadel angeordnet ist;
wobei der Hin- und Herbewegmechanismus Folgendes umfasst:
eine Drückeinrichtung zum Absenken der Spinnnadel, derart, dass die Durchstechnadel die Spinnnadel durchdringen und nach außen herausragen kann; und
eine elastische Einrichtung zum Anheben und Zurückstellen der durch die Drückeinrichtung abgesenkten Spinnnadel in ihre Ausgangsposition, und
wobei die Spinnnadel derart abgesenkt ist, dass die herausragende Länge der Durchstechnadel 1 mm bis 15 mm ist.

3. Elektrospinnvorrichtung nach Anspruch 2,
des Weiteren umfassend eine Lösungsmitteleinspritzdüse, die einen Außendurchmesser aufweist, der kleiner als der Innendurchmesser der Durchstechnadel ist, und die eine hohle Lösungsmitteleinspritznadel aufweist, die koaxial innerhalb der Durchstechnadel angeordnet ist.

4. Elektrospinnvorrichtung nach Anspruch 3,
wobei die Spitze der Lösungsmitteleinspritznadel 1 mm bis 10 mm unterhalb von der Spitze der Spinnnadel positioniert ist, derart, dass die Spitze der Lösungsmitteleinspritznadel zwischen der Spitze der Durchstechnadel und der Spitze der Spinnnadel angeordnet ist.

5. Elektrospinnvorrichtung nach Anspruch 4,
welche des Weiteren Folgendes umfasst:
eine erste Düsenhalterung zum Haltern und Befestigen von mindestens zwei Spinndüsen in einer Reihe;
eine zweite Düsenhalterung zum Haltern und Befestigen von mindestens zwei Durchstechdüsen in einer Reihe, um der an der ersten Düsenhalterung befestigten Spinndüse zu entsprechen; und
eine dritte Düsenhalterung zum Haltern und Befestigen von mindestens zwei Lösungsmitteleinspritzdüsen in einer Reihe, um der an der zweiten Düsenhalterung befestigten Durchstechdüse zu entsprechen.

6. Elektrospinnvorrichtung nach Anspruch 5,
welche des Weiteren Folgendes umfasst:
eine erste Hin- und Herbewegeinrichtung zum vertikalen Hin- und Herbewegen der ersten Düsenhalterung, um die Spinnnadel in Bezug auf die Durchstechnadel relativ abzusenken oder um die Spinnnadel in ihre Ausgangsposition nach oben zurückzustellen, derart, dass die Durchstechnadel die Spinnnadel durchdringen und nach außen herausragen kann; und
eine zweite Hin- und Herbewegeinrichtung zum vertikalen Hin- und Herbewegen der dritten Düsenhalterung, um die Lösungsmitteleinspritznadel anzuheben oder um die Lösungsmitteleinspritznadel in ihre Ausgangsposition abzusenken, derart, dass die Lösungsmitteleinspritznadel die Spinnnadel oder die Durchstechnadel durchdringen und herausragen kann.

7. Elektrospinnvorrichtung nach Anspruch 6,
wobei die erste Hin- und Herbewegeinrichtung Folgendes umfasst:
einen Motor, der in der Lage ist, vorwärts- und rückwärts zu steuern;
eine Bewegungsumwandlungsvorrichtung zum Umwandeln der Vorwärts- und Rückwärtsdrehbewegung dieses Motors in eine lineare Bewegung; und
einen Hin- und Herbewegantriebsmechanismus zum nach oben und nach unten Hin- und Herbewegen der ersten Düsenhalterung entsprechend der linearen Bewegung.

8. Elektrospinnvorrichtung nach Anspruch 6,
wobei die erste Hin- und Herbewegeinrichtung und die zweite Hin- und Herbewegeinrichtung ein pneumatisches System umfassen.

9. Elektrospinnvorrichtung nach Anspruch 6,
wobei die zweite Hin- und Herbewegeinrichtung ein Motorantriebsystem ist, das in der Lage ist, vorwärts und rückwärts zu steuern.

10. Elektrospinnvorrichtung nach Anspruch 6,
wobei die zweite Hin- und Herbewegeinrichtung Folgendes umfasst:
einen Griff zum Erzeugen der Vorwärts- und Rückwärtsdrehkraft; und
einen Hin- und Herbewegtransfermechanismus zum nach oben und nach unten Hin- und Herbewegen der dritten Düsenhalterung durch das Umwandeln der Vorwärts- und Rückwärtsdrehbewegung dieses Griffs in eine lineare Bewegung.

11. Elektrospinnvorrichtung nach Anspruch 6,
die des Weiteren mindestens eine Reinigungssprühdüse zum Entfernen von an der Spitze der Spinnnadel angehefteten Ablagerungen durch Sprühen eines Lösungsmittels auf die Außenseite der Spitze der Spinnnadel umfasst.

12. Elektrospinnvorrichtung nach Anspruch 11,
die des Weiteren einen Transfertisch zum Hin- und Herbewegen der Reinigungssprühdüse entlang der ersten Düsenhalterung umfasst.

## Revendications

1. Dispositif d'électrofilage, comprenant
un dérouler pour dérouler un rouleau sur lequel un substrat pour empiler des nanofibres en filant une solution de filage est enroulé ;
un enrouler pour enrouler le substrat sur lequel les nanofibres sont empilées ;
un collecteur pour empiler des nanofibres filées à partir d'une porte-buse pendant que le substrat est transféré ;
un réservoir de stockage de solution pour stocker la solution de filage ; un mécanisme de transfert de solution pour transférer la solution dans le réservoir de stockage de solution à la porte-buse ;
une alimentation électrique haute tension pour appliquer une haute tension à la solution de filage déchargée à partir de l'aiguille de filage de la porte-buse, dans lequel la porte-buse comprend :
une filière ayant une aiguille de filage creuse pour décharger la solution de filage vers l'extérieur ;
une buse de perçage comprenant une aiguille de perçage creuse qui a un diamètre extérieur inférieur au diamètre intérieur de l'aiguille de filage et qui est disposée coaxialement dans l'aiguille de filage ; et
un mécanisme de va-et-vient pour effectuer un mouvement de va-et-vient de l'aiguille de perçage et de l'aiguille de filage l'une par rapport à l'autre,
dans lequel la solution de filage fournie à la buse de perçage passe par l'aiguille de perçage et est déchargée vers l'extérieur à travers l'aiguille de filage de la filière.

2. Dispositif d'électrofilage selon la revendication 1,
dans lequel l'aiguille de perçage est disposée 0,5 mm à 50 mm en dessous de la pointe de l'aiguille de filage,
dans lequel le mécanisme de va-et-vient comprend :
un moyen de pression pour abaisser l'aiguille de filage de manière que l'aiguille de perçage est capable de pénétrer l'aiguille de filage et de faire saillie vers l'extérieur ; et
un moyen élastique pour soulever et ramener l'aiguille de filage abaissée par le moyen de pression à sa position initiale, et
dans lequel l'aiguille de filage est abaissée de manière que la longueur de saillie de l'aiguille de perçage est 1 mm à 15 mm.

3. Dispositif d'électrofilage selon la revendication 2,
comprenant en outre une buse d'injection de solvant ayant un diamètre extérieur inférieur au diamètre intérieur de l'aiguille de perçage et ayant une aiguille d'injection de solvant disposée coaxialement dans l'aiguille de perçage.

4. Dispositif d'électrofilage selon la revendication 3,
dans lequel la pointe de l'aiguille d'injection de solvant est positionnée 1 mm à 10 mm en dessous de la pointe de l'aiguille de filage de manière que la pointe de l'aiguille d'injection de solvant est disposée entre la pointe de l'aiguille de perçage et la pointe de l'aiguille de filage.

5. Dispositif d'électrofilage selon la revendication 4,
qui comprend en outre :
un premier support de buse pour supporter et fixer au moins deux filières dans une rangée ;
un deuxième support de buse pour supporter et fixer au moins deux buses de perçage dans une rangée pour correspondre à la filière fixée au premier support de buse ; et
un troisième support de buse pour supporter et fixer au moins deux buses d'injection de solvant dans une rangée pour correspondre à la buse de perçage fixée au deuxième support de buse.

6. Dispositif d'électrofilage selon la revendication 5,
qui comprend en outre :
un premier moyen de mouvement de va-et-vient pour effectuer un mouvement de va-et-vient du premier support de buse dans la direction verticale pour abaisser relativement l'aiguille de filage par rapport à l'aiguille de perçage ou pour ramener l'aiguille de filage vers le haut à sa position initiale de manière que l'aiguille de perçage est capable de pénétrer l'aiguille de filage et de faire saillie vers l'extérieur ; et
un deuxième moyen de mouvement de va-et-vient pour effectuer un mouvement de va-et-vient du troisième support de buse dans la direction verticale pour soulever l'aiguille d'injection de solvant ou pour abaisser l'aiguille d'injection de solvant à sa position initiale de manière que l'aiguille d'injection de solvant est capable de pénétrer l'aiguille de filage ou l'aiguille de perçage et de faire saillie.

7. Dispositif d'électrofilage selon la revendication 6,
dans lequel le premier moyen de mouvement de va-et-vient comprend :
un moteur capable de contrôle avant et arrière ;
un mécanisme de conversion de mouvement pour convertir le mouvement de rotation avant et arrière de ce moteur en un mouvement linéaire ; et
un mécanisme d'entraînement de va-et-vient pour effectuer un mouvement de va-et-vient du premier support de buse vers le haut et vers le bas conformément au mouvement linéaire.

8. Dispositif d'électrofilage selon la revendication 6,
dans lequel le premier moyen de mouvement de va-et-vient et le deuxième moyen de mouvement de va-et-vient comprennent un système pneumatique.

9. Dispositif d'électrofilage selon la revendication 6,
dans lequel le deuxième moyen de mouvement de va-et-vient est un système d'entraînement de moteur capable de contrôle avant et arrière.

10. Dispositif d'électrofilage selon la revendication 6,
dans lequel le deuxième moyen de mouvement de va-et-vient comprend :
une poignée pour générer la puissance de rotation avant et arrière ; et
un mécanisme de transfert de va-et-vient pour effectuer un mouvement de va-et-vient du troisième support de buse vers le haut et vers le bas en convertissant le mouvement de rotation avant et arrière de cette poignée en un mouvement linéaire.

11. Dispositif d'électrofilage selon la revendication 6,
qui comprend en outre au moins une buse de pulvérisation de nettoyage pour éliminer des dépôts attachés à la pointe de l'aiguille de filage en pulvérisant un solvant sur la face extérieure de la pointe de l'aiguille de filage.

12. Dispositif d'électrofilage selon la revendication 11,
qui comprend en outre une table de transfert pour effectuer un mouvement de va-et-vient de la buse de pulvérisation de nettoyage le long du premier support de buse.
